# DEMANDE DE BREVET EUROPEEN

(11) **EP 0 742 532 A1**
(43) Date de publication de la demande: **13.11.1996**
(21) Numéro de dépôt: 95450007.0
(22) Date de dépôt: 12.05.1995
(51) Int. Cl.: G06K 19/073

(54) **Procédé de mémoration et de restitution d'un code secret**

(71) Demandeur: Lenfant, Jean-Pierre, F-87600 Rochechouart (FR)
(72) Inventeur: Lenfant, Jean-Pierre, F-87600 Rochechouart (FR)
(74) Mandataire: Thébault, Jean-Louis

(57) **Abrégé**

Procédé de mémorisation et de restitution d'un code secret par affichage, notamment applicable aux cartes de crédit, caractérisé en ce qu'on introduit le code secret dans des premiers moyens de mémorisation cachés, on introduit un code personnel dans des seconds moyens de mémorisation reliés aux premiers moyens de mémorisation et lors de l'interrogation, on compare le code introduit avec le code personnel mémorisé dans les seconds moyens de mémorisation et si les deux codes sont identiques, le code secret des premiers moyens de mémorisation est affiché.
L'invention a également pour objet un boîtier permettant la mise en oeuvre du procédé, comprenant un clavier (10), des moyens d'affichage (12), un logement (14) prévu pour recevoir une carte (16) et un microprocesseur (15).

## Description

La présente invention a pour objet un procédé de mémorisation et de restitution d'un code secret et un dispositif adapté pour mettre en oeuvre le procédé selon l'invention.

De nombreuses cartes à mémoire intégrée telles que les cartes magnétiques ou les cartes à puces fonctionnent à l'aide d'un code secret unique qui doit rester connu du seul titulaire afin que celui-ci puisse effectuer les opérations autorisées à l'aide de ladite carte.

Le code doit être mémorisé par le titulaire afin que des tiers ne puisse disposer simultanément de la carte et du code correspondant.

C'est le seul moyen efficace et présentant toutes les garanties.

Certaines personnes qui utilisent peu leur carte ou qui ont des problèmes de mémorisation comme les personnes âgées, essaient de trouver des moyens pour inscrire ce numéro dans des endroits discrets mais une telle méthode pose plus de problèmes qu'elle n'apporte de solutions et le secret est nécessairement partiel.

D'autres personnes conservent ce numéro sur un document mis en lieu sûr, mais dans ce cas, c'est au moment de l'utiliser que le titulaire souhaite consulter ce document qu'il n'a donc pas sur lui.

Par contre cette solution permet de retrouver à terme le code sans risque de divulgation.

Lorsque le code secret est oublié, la seule solution pour le titulaire est de demander une nouvelle carte car l'organisme ne conserve pas de trace du code associé pour garantir la confidentialité.

L'organisme chargé de délivrer les cartes attribue une nouvelle carte dont le code secret est affecté par un ordinateur à partir d'un algorithme complexe permettant d'attribuer un code propre et unique à une carte donnée, avec impossibilité d'affecter un numéro identique ou de revenir sur un numéro préalablement attribué pour un même titulaire.

Le coût pour l'organisme est loin d'être négligeable tant en matériel qu'en gestion de l'opération de renouvellement, en distribution et en destruction de la carte dont le code a été oublié.

De plus, la durée de renouvellement de la carte interdit au titulaire de recourir aux services correspondants, ce qui est une perte pour l'organisme. Le coût pour le titulaire est celui d'une nouvelle carte.

Un autre problème se pose avec les cartes de crédit notamment celles qui permettent l'achat de produits dans les différents commerces car certains titulaires ont tendance à l'oublier sur place sans se rappeler du lieu où elle a été perdue.

En plus des risques de vol, cela provoque des désagréments car il faut revenir sur le lieu, ce qui peut être un réel problème surtout en voyage.

De plus, dans la plupart des cas, le commerçant doit retourner cette carte à l'organisme qui informe à son tour le titulaire, ce qui est une source de désagréments.

Le but de l'invention est de proposer un procédé qui permet de mémoriser un code secret et de le restituer moyennant un code personnel choisi par le titulaire, qui permet de rappeler au titulaire qu'il doit reprendre sa carte après usage et qui évite la lecture du code secret par des tiers.

L'invention a également pour objet un boîtier permettant la mise en oeuvre du procédé avec rangement de ladite carte, ce boîtier étant équipé de moyens de rappel acoustique lorsque la carte est en dehors de son rangement.

A cet effet, le procédé de mémorisation et de restitution d'un code secret par affichage, notamment applicable aux cartes de crédit, se caractérise en ce qu'on introduit le code secret dans des premiers moyens de mémorisation cachés, on introduit un code personnel dans des seconds moyens de mémorisation reliés aux premiers moyens de mémorisation et lors de l'interrogation, le code introduit est comparé avec le code personnel des seconds moyens de mémorisation et si les deux codes sont identiques, le code secret des premiers moyens de mémorisation est affiché.

Selon un mode de réalisation préférentiel, l'affichage est temporaire.

Plus particulièrement, après trois essais, les premiers moyens de mémorisation sont initialisés.

L'invention a également pour objet un boîtier pour la mise en oeuvre du procédé qui comprend un clavier à touches, des moyens d'affichage, un microprocesseur avec des premiers et des seconds moyens de mémorisation accessibles à l'écriture grâce au clavier, les premiers moyens de mémorisation étant accessibles à la lecture par le microprocesseur seulement à travers les seconds moyens de mémorisation.

De façon à contrôler la durée d'affichage, le microprocesseur comprend une horloge.

Ce boîtier comprend un logement pour recevoir la carte, ce logement comprenant un capteur de présence relié à l'horloge et un bruiteur de façon que ce bruiteur soit activé lorsque le logement reste vide au delà d'une durée limite programmée.

Selon une variante de réalisation, ce boîtier comprend un gradateur de la puissance du bruiteur, proportionnellement au temps écoulé à partir du retrait de la carte hors du logement.

Des cellules photovoltaïques fournissent l'énergie électrique pendant l'utilisation et une pile assure la mémorisation permanente des informations introduites.

Selon un perfectionnement de l'invention le microprocesseur assure d'autres fonctions telles que calcul, agenda, ou planificateur.

L'invention est décrite ci-après selon un mode de réalisation particulier, en regard du dessin annexé sur lequel :
- la figure 1 représente une vue en perspective du boîtier selon l'invention, et
- la figure 2 représente une vue de détail du logement de la carte avec un bruiteur.

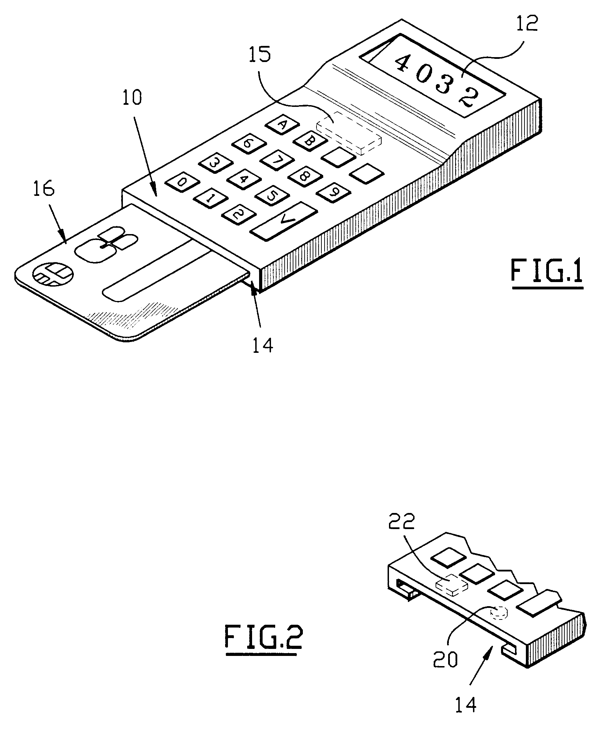

Sur la Figure 1, on a représenté un boîtier, équipé d'un clavier 10, d'un écran 12 et d'un logement 14.

De façon préférentielle, les dimensions sont sensiblement celles d'une carte de crédit 16 également représentée sur cette figure 1.

Ce boîtier est équipé d'un microprocesseur 15, représenté de façon schématique, qui peut être programmé et qui comprend des premiers et des seconds moyens de mémorisation.

Les premiers moyens de mémorisation sont du type cachés et ne peuvent être lus que par le microprocesseur à travers les seconds moyens de mémorisation mais sont accessibles à l'écriture grâce au clavier par le titulaire.

Les seconds moyens de mémorisation sont accessibles directement à l'écriture par le titulaire.

De façon connue, une source d'énergie électrique assure l'alimentation de l'écran 12 et des circuits électroniques associés au microprocesseur 15.

Le microprocesseur 15 comprend une fonction de comparaison.

Le procédé de mémorisation et de restitution selon l'invention fonctionne ainsi que cela est décrit ci-après.

Le titulaire appuie sur la touche A du clavier afin d'introduire dans les premiers moyens de mémorisation le code secret fourni par l'organisme qui délivre la carte de crédit.

Ce code n'est alors plus accessible à la lecture.

Si le titulaire appuie à nouveau sur la touche A, l'écran est vierge.

La saisie d'un nouveau code secret a pour effet d'écraser le précédent.

Le titulaire appuie sur la touche B pour saisir un code personnel simple, choisi par lui-même, qu'il est certain de mémoriser, par exemple une date événementielle.

Ce code personnel est inscrit dans les seconds moyens de mémorisation.

Si le titulaire appuie à nouveau sur la touche B, le boîtier affiche un écran vierge et toute écriture a pour effet d'écraser le code personnel saisi précédemment.

Le procédé prévoit une touche V pour l'interrogation.

L'utilisateur qui souhaite voir affiché son code secret saisit au clavier son code personnel et valide à l'aide de la touche V.

La touche V actionne le microprocesseur qui compare le code validé avec le code personnel inscrit dans les seconds moyens de mémorisation.

Si les deux codes ne correspondent pas, le microprocesseur déclenche un compteur qui s'incrémente à chaque essai de façon à limiter le nombre d'essais et éviter la fraude, ceci de façon connue.

Un nombre de trois essais parait raisonnable.

Si les deux codes sont identiques, le microprocesseur lit le code secret inscrit dans les premiers moyens de mémorisation et l'affiche en clair à l'écran.

Le boîtier comprend un logement 14 prévu pour recevoir une carte de crédit 16.

Ce logement, parallèle au plan du clavier, reçoit de façon préférentielle la carte de crédit dont le code secret est mémorisé dans les seconds moyens de mémorisation du microprocesseur du boîtier.

Le boîtier est équipé d'un bruiteur 20, ainsi que cela est représenté sur la figure 2.

Ce bruiteur est relié au microprocesseur équipé de façon connue d'une horloge.

Le boîtier comprend aussi un détecteur de présence 22.

Dès que la carte est retirée de son logement, le détecteur de présence active un compteur de temps calé sur l'horloge.

Au delà d'une durée programmée, le microprocesseur déclenche le bruiteur qui émet une onde sonore, rappelant ainsi au titulaire l'absence de carte dans le boîtier.

La durée programmable est basée sur le temps nécessaire pour une transaction normale, de l'ordre de la minute.

Ainsi le bruiteur n'est pas déclenché pour toute opération dont la durée est inférieure à celle qui est programmée.

Dans le cas où le bruiteur est déclenché, l'introduction de la carte dans son logement arrête le bruiteur et le compteur temps est initialisé.

Selon un perfectionnement, l'onde sonore peut avoir une intensité croissante, proportionnelle au temps.

Sur la figure 2, on remarque que le logement est simplement une fente ménagée dans le boîtier, contrairement au mode de réalisation de la figure 1, dans lequel le boîtier est fermé, ce qui assure une protection mécanique plus efficace de la carte.

L'affichage est dans tous les cas à durée limitée de façon que le code secret soit accessible temporairement.

Afin d'augmenter la durée de vie de l'alimentation, l'invention prévoit l'intégration dans le boîtier de cellules photovoltaïques qui complètent l'énergie fournie par des piles permettant une alimentation permanente des mémoires.

L'invention prévoit également l'association de fonctions supplémentaires, notamment calcul, agenda, planificateur à celle très spécifique de l'invention.

Ces procédé et boîtier ont été décrits en application à un code secret, mais ils peuvent être étendus à plusieurs codes secrets.

Ainsi, les codes de portier automatique, d'antivol voiture ou plus généralement de tous dispositifs à déclenchement par codes peuvent être disponibles pour l'utilisateur, éventuellement à partir d'un même code personnel, en faisant défiler l'affichage.

## Revendications

1. Procédé de mémorisation et de restitution d'un code secret par affichage, notamment applicable aux cartes de crédit, caractérisé en ce qu'on introduit le code secret dans des premiers moyens de mémorisation cachés, on introduit un code personnel dans des seconds moyens de mémorisation reliés aux premiers moyens de mémorisation et lors de l'interrogation, on compare le code introduit avec le code personnel mémorisé dans les seconds moyens de mémorisation et si les deux codes sont identiques, le code secret des premiers moyens de mémorisation est affiché.

2. Procédé selon la revendication 1, caractérisé en ce qu'on affiche le code secret de façon temporaire.

3. Procédé selon la revendication 1 ou 2, caractérisé en ce que, après trois essais, les premiers moyens de mémorisation sont initialisés.

4. Boîtier pour la mise en oeuvre du procédé selon l'une quelconque des revendications précédentes, caractérisé en ce qu'il comprend un clavier (10) à touches, des moyens d'affichage (12), un microprocesseur (15) avec des premiers et des seconds moyens de mémorisation accessibles à l'écriture grâce au clavier (10), les premiers moyens de mémorisation étant accessibles à la lecture par le microprocesseur (15) seulement à travers les seconds moyens de mémorisation.

5. Boîtier selon la revendication 4, caractérisé en ce que le microprocesseur comprend également une horloge qui contrôle la durée d'affichage.

6. Boîtier selon la revendication 5, caractérisé en ce qu'il comprend un logement (14) prévu pour recevoir une carte (16), ce logement comprenant un capteur de présence (22).

7. Boîtier selon la revendication 5 et 6, caractérisé en ce que le capteur de présence (22) est relié à l'horloge du microprocesseur (15) et à un bruiteur (20) de façon que le bruiteur soit activé lorsque le logement reste vide au delà d'une durée limite programmée.

8. Boîtier selon la revendication 7, caractérisé en ce qu'il comprend un gradateur de la puissance du bruiteur, proportionnelle au temps écoulé depuis la sortie de la carte du logement.

9. Boîtier selon l'une quelconque des revendications 4 à 8, caractérisé en ce qu'il comprend des cellules photovoltaïques fournissant l'énergie électrique pendant l'utilisation et une pile pour la mémorisation permanente des informations introduites.

10. Boîtier selon l'une quelconque des revendications 4 à 9, caractérisé en ce que le microprocesseur assure d'autres fonctions telles que calcul, agenda, ou planificateur.
